# EUROPEAN PATENT SPECIFICATION

(11) **EP 1 647 439 B1**
(45) Date of publication and mention of the grant of the patent: **04.05.2011**
(21) Application number: 05018983.6
(22) Date of filing: 01.09.2005
(51) Int. Cl.: B60N 2/28

(54) **Car seat with fixed base**
Autositz mit einer fixierten Basis
Siège de voiture avec base fixe

(30) Priority: 15.09.2004 GB 0420588
(43) Date of publication of application: 19.04.2006
(73) Proprietor: LINK TREASURE LIMITED, Tortola, British Virgin Islands (GB)
(72) Inventor: Barker, Derrick, Nr Pershore, Worcestershire, WR10 2NU (GB)
(74) Representative: Bailey, David Martin

(56) References cited:
- EP-A2- 0 822 115
- WO-A2-2005/108155
- GB-A- 2 288 328
- US-A1- 2003 209 926

## Description

The present invention relates to a car seat which is secured in a vehicle in combination with a base.

WO 2005/108155, a reference under Article 54(3) EPC describes a base for a child safety seat to be used with an adult seat in a vehicle equipped with ISOFIX loops. The base comprises a pair of front humps (8) and a pair of rear humps with a flat portion (10) between the pairs. The humps have moulded recesses for the front and rear anchor bars of a conventional infant carrier also includes a reinforcing frame formed from a U-shaped steep tube with the junction of its limbs at the front of the base. An upper base moulding has internal ribs which define a slot for a release member which has two cross slots for pivot pins and also carries release button. The pivot pins provide points for hooks at the recesses for the anchor bars of the infant carrier.

EP 0822115 describes a child safety seat for use in a vehicle. The seat comprises a base member adapted to rest on a vehicle seat, a seat assembly mounted on the base member, and guide means on the child seat defining a strap path for a strap of a vehicle seat belt to secure the seat to a vehicle seat.

US 2003/0209926 describes a child seat device formed of a base to be placed on a seat of a car, a child seat body placed on the base, and a connecting member for connecting a rear bottom of the child seat body to a fixed portion. The connecting member increases a length thereof while absorbing a kinetic energy of the child seat body when a tension higher than a predetermined value is applied thereto from the child seat body.

Document GB 2 288 328, which is considered to be the closest prior art, describes a child seat device formed of a base and a child seat body introduced caterally into the base and subsequently rotated.

In its broadest sense, the present invention provides a child car seat as defined in claim 1.

The securing base comprises a pair of latching means operatively mounted on the overhang protrusions.

Preferably, the child car seat has a support leg at one end, and a support bar at the another end thereof.

Preferably, the securing base is securable to a vehicle by a seat belt.

Preferably, the securing base is formed with a ridged spine section that is contoured in size to engage with the car seat.

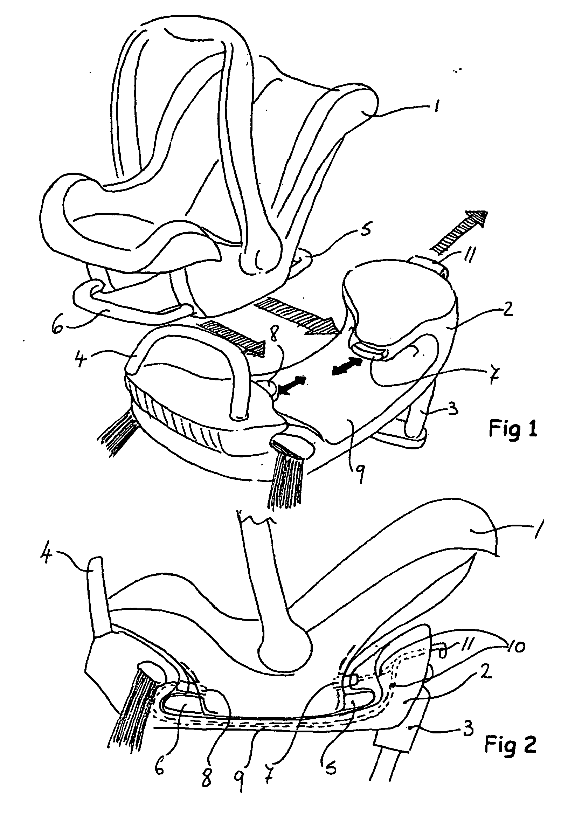

Fig.1 shows an embodiment of a child car seat in accordance with the present invention in a configuration before inserting the car seat to the fixed base;
Fig. 2 shows the assembled condition with the overhang sections engaged;

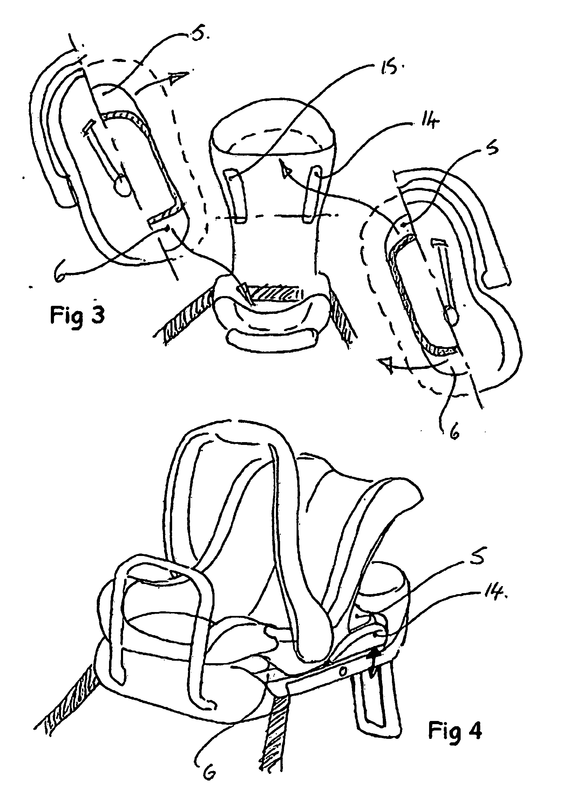

Fig. 3 shows an alternative direction of insertion of the car seat to the fixed base; and
Fig.4 shows the complete assembly with side locks on the base.

With reference to the accompanying drawings and by way of example only, the present invention relates to a car seat (1), which is secured in a vehicle in combination with a base (2). The base (2) is secured in the vehicle by way of the adult seat belt. The car seat has protrusions (6) at the front and (5) at the rear, on the underside of the seat.

The base (2) has overhang features (12) & (13) which house latching means (7) & (8).

The base (2) also has a support bar (4) at one end positioned so as to reduce the tipping of the car seat during crash rebound.

The front overhang section (12) and rear overhang section (13), are linked by a strong and generally ridged spine section (9).

A release means (11) is provided and linked to the latch means (7) & (8) so that both latches (7) & (8) will disengage from the child seat at the same time, when removing the child seat (1) from the fixed base (2).

The base (2) also has a support leg (3) at the opposing end from the support bar (4).

The car seat (1) can be inserted from a sideways direction of the seat and the base so as to engage with the front overhang (12) and the rear overhang (13) at the same time. Alternatively the car seat (1) can be inserted from a sideways direction of the seat and the base to as to engage one overhang followed by another in no particular order.

As a not claimed alternative, the car seat (1) can be prevented from sideways displacement by latches (14) and (15) which can be depressed.

The shape of said latches are compatible with the shape on the base of the car seat so that the car seat base can also displace the latches during the insertion of the car seat into the base.

## Claims

1. A child car seat comprising a seat (1) and a securing base (2), wherein the seat (1) is limited to be loaded onto the securing base (2) from a sideways direction of the seat and the base, and the car seat (1) has a pair of protrusions (5, 6) on the underside thereof; wherein the securing base (2) has compatible and mating protrusions adapted for an interlocking engagement with the car seat protrusions (5, 6) to prevent the seat (1) from disengaging from the securing base (2); wherein the child car seat further comprises a pair of latching means (7, 8) engaging the car seat (1) within the securing base (2) and the pair of latching means (7, 8) are linked to a release means (11) adapted to be released at same time for allowing the seat (1) departing from the base (2) from the sideways direction.

2. A child car seat as claimed in Claim 1, wherein the securing base (2) further comprises a pair of latching means (7,8) operatively mounted on the overhand protrusions (12,13).

3. A child car seat as claimed in any one of claims 1 to 2, wherein the child car seat (1) has a support leg (3) at one end, and a support bar (4) at the another end thereof.

4. A child car seat as claimed in any preceding claim, wherein the securing base (2) is securable to a vehicle by a seat belt.

5. A child car seat as claimed in any preceding claim wherein the securing base (2) is formed with a ridged spine section (9) that is contoured in size to engage with the car seat (1).

## Patentansprüche

1. Kindersitz mit einem Sitz (1) und einer Befestigungsbasis (2), wobei der Sitz (1) darauf beschränkt ist, von einer seitlichen Richtung des Sitzes und der Basis auf die Befestigungsbasis (2) geladen zu werden; und der Sitz (1) ein Paar Vorsprünge (5,6) auf der Unterseite desselben aufweist; wobei die Befestigungsbasis (2) kompatible und passende Vorsprünge aufweist, die für einen verriegelnden Eingriff mit den Sitzvorsprüngen (5,6) ausgebildet sind, um zu verhindern, dass sich der Sitz (1) von der Befestigungsbasis (2) löst; wobei der Kindersitz des weiteren ein Paar Klinkenelemente (7,8) aufweist, die den Sitz (1) mit der Befestigungsbasis (2) in Eingriff bringen, und wobei das Paar der Klinkenelemente (7,8) mit einer Löseeinrichtung (11) verbunden ist, die dafür vorgesehen ist, gleichzeitig gelöst zu werden, um es dem Sitz (1) zu ermöglichen, sich von der Basis (2) in der seitlichen Richtung zu entfernen.

2. Kindersitz nach Anspruch 1, wobei die Befestigungsbasis (2) des weiteren ein Paar Klinkenelemente (7,8) aufweist, welche betriebsfähig auf den überstehenden Vorsprüngen (12,13) montiert sind.

3. Kindersitz nach einem der Ansprüche 1 oder 2, wobei der Kindersitz an einem Ende desselben ein Stützbein (3) und an dem anderen Ende desselben eine Haltestange (4) aufweist.

4. Kindersitz nach einem der vorhergehenden Ansprüche, wobei die Befestigungsbasis (2) mittels eines Sicherheitsgurts mit dem Fahrzeug verbindbar ist.

5. Kindersitz nach einem der vorhergehenden Ansprüche, wobei die Befestigungsbasis (2) einen gezahnten Rückenabschnitt (9) aufweist, welcher eine derartige Größe besitzt, um mit dem Sitz (1) in Eingriff zu gehen.

## Revendications

1. Siège de voiture pour enfant, comprenant un siège (1) et une base de fixation (2), étant précisé que le siège (1) est limité pour être chargé sur la base de fixation (2) par le côté du siège et de la base, et que le siège de voiture (1) présente sur son côté inférieur deux parties saillantes (5, 6) ; que la base de fixation (2) présente des parties saillantes compatibles et correspondantes qui sont aptes à réaliser un verrouillage par emboîtement avec les parties saillantes de siège de véhicule (5, 6) pour empêcher le siège (1) de se désolidariser de la base de fixation (2) ; et que le siège de voiture pour enfant comprend par ailleurs deux moyens d'enclenchement (7, 8) qui emboîtent le siège de voiture (1) à l'intérieur de la base de fixation (2), et les deux moyens d'enclenchement (7, 8) sont reliés à des moyens de déblocage (11) aptes à être débloqués en même temps pour permettre d'enlever le siège (1) de la base (2) par le côté.

2. Siège de voiture pour enfant tel que revendiqué dans la revendication 1, dans lequel la base de fixation (2) comprend par ailleurs deux moyens d'enclenchement (7, 8) qui sont montés de manière fonctionnelle sur les parties saillantes qui dépassent (12, 13).

3. Siège de voiture pour enfant tel que revendiqué dans l'une quelconque des revendications 1 à 2, étant précisé que le siège de voiture pour enfant (1) a un pied de support (3) à une extrémité, et une barre de support (4) à l'autre extrémité.

4. Siège de voiture pour enfant tel que revendiqué dans l'une quelconque des revendications, étant précisé que la base de fixation (2) est apte à être fixée à un véhicule à l'aide d'une ceinture de sécurité.

5. Siège de voiture pour enfant tel que revendiqué dans l'une quelconque des revendications, étant précisé que la base de fixation (2) est pourvue d'une partie centrale nervurée (9) dont le contour est dimensionné pour s'emboîter avec le siège de voiture (1).
